# EUROPEAN PATENT SPECIFICATION

(11) **EP 3 901 549 B1**
(45) Date of publication and mention of the grant of the patent: **27.12.2023**
(21) Application number: 19899855.1
(22) Date of filing: 14.11.2019
(51) Int. Cl.: B01J 19/00, F28D 7/10, F28F 1/02, F28F 13/08, F28F 13/12, B01F 25/25, B01F 25/43, B01F 33/30

(54) **HEAT EXCHANGE TUBE AND HEAT EXCHANGER**
WÄRMETAUSCHERROHR UND WÄRMETAUSCHER
TUBE D'ÉCHANGE DE CHALEUR ET ÉCHANGEUR DE CHALEUR

(30) Priority: 17.12.2018 CN 201811607047
(43) Date of publication of application: 27.10.2021
(73) Proprietor: Qingdao Taitannigao Reactor Co. Ltd, Qingdao, Shandong 266000 (CN)
(72) Inventor: ZHANG, Suming, Shandong 266000 (CN)
(74) Representative: Scholl, Matthias
(86) International application number: PCT/CN2019/118506
(87) International publication number: WO 2020/125286

(56) References cited:
- WO-A1-2014/167506
- WO-A1-2017/007351
- CN-A- 1 506 647
- CN-A- 106 895 716
- CN-A- 109 520 354
- CN-U- 203 100 496
- CN-U- 209 978 688
- GB-A- 1 340 913
- JP-A- H1 038 491
- JP-A- H03 241 290
- JP-A- 2001 296 091
- JP-A- 2009 092 269
- JP-A- 2011 133 141
- JP-B2- S5 749 795
- US-A- 1 922 838
- US-A- 3 358 749
- US-A- 4 633 935
- US-A- 5 397 179
- US-A1- 2016 377 349

## Description

The disclosure relates to the field of petrochemical industry, fine chemical industry, pharmaceutical preparation, food and beverage, etc., and more particularly to a heat exchange tube and reactor comprising the same.

The industrial manufacturing fields such as petrochemical, fine chemical pharmaceutical preparation, food and beverage often involve in physical mixing or chemical reaction of homogeneous and heterogeneous fluids. The physical mixing and chemical reaction are usually accompanied by strong temperature changes (mostly instantaneous heat release), and improper control will cause disastrous consequences such as fire and explosion. In recent years, the microchannel reactors have been developed to achieve the mixing or chemical reactions between molecules or submolecules of fluids, and there are more and more kinds of these microchannel reactors. Because of the strong heat transfer capability of these micro channels of micron and submillimeter, many chemical reactions difficult to realize in the past have been solved in the laboratory. The chemical reactions that need several hours or even decades to complete can be completed in milliseconds, seconds, and minutes. For example, US 2016/377348 A1 discloses a heat exchanger comprising a flat outer tube and a flat inner tube with depressions forming passages with alternating narrow and wide cross-sections; JP 2001 296091 A discloses a heat exchanger comprising a straight outer tube and an inner tube having flat segments with a torsion angel there between; and US 3358749 A discloses an interfacial surface generator.

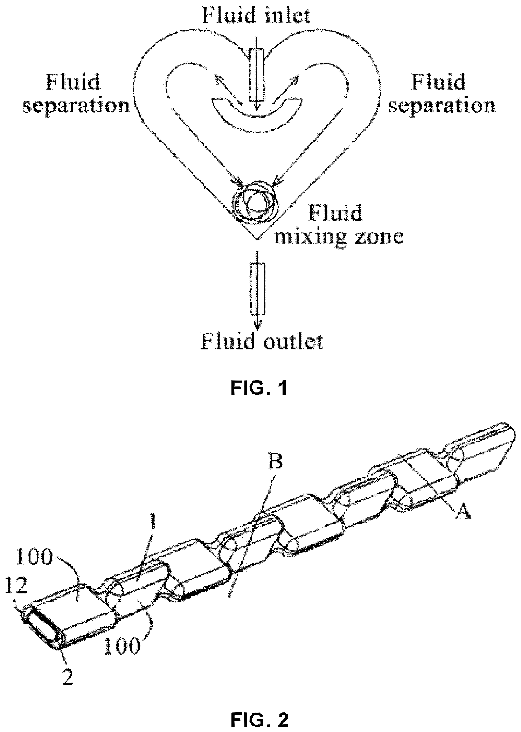

FIG. 1 is a schematic diagram of a microchannel reaction unit of a Corning microreactor. In the figure, the channel is etched or carved on the contact plane of two pieces of material, with a depth of about tens of microns. The fluid enters the heart-shaped structure from the entrance, and is separated into two paths after colliding with the semilunar arc structure. The two paths proceed respectively along two sides of the heart-shaped structure and enter the bottom cavity of the heart-shaped structure, and the fluids are mixed therein. The two separated paths of fluid are mixed therein to form one which is squeezed into the next heart-shaped structure. The two adjacent heart-shaped structures can be connected in series or in parallel as needed. At the same time, the heat exchange required by the reaction is rapidly conducted by the interlayer disposed on both sides of the heat exchanger, and the conduction area is much larger than that of the jacket or coil heat exchanger of a kettle reactor. However, due to the limitation of the structure, the reactor can only bear the pressure below 1.8 MPa and the annual flux of 2000 cubic meters.

Another way of reaction and mixing at home and abroad is to use metal capillary microreactors with different diameters according to the process and flow requirements, which have also achieved good results in some industries. However, no matter what the diameter of the capillary is, its section is circular. Smaller diameter can restrict the space of the fluid molecules in the inner tube, and also have a certain reaction/mixing effect, but the mixing is achieved by a kind of horizontal plug flow. When the fluid flows, the heat exchange effect between the fluid flowing near the tube wall and the outside is different from the heat exchange effect between the fluid flowing in the middle of the tube and the outside. With thick wall, this kind of metal capillary structure can be used under high pressure and ultra-high pressure.

Static tubular reactor, which is widely used at home and abroad, is filled with different specifications of regular or irregular packing in tubes with various diameter, to produce strong turbulence when the fluid flows in the tubes, thus strengthening the reaction and mixing of the fluid. However, the turbulence fails to reach the effect of forced binding between molecules in extremely limited space, but can only increase the chance of binding.

No matter what kind of structure is used, there are few cases of continuous industrial production of large flow and large tonnage products by using the principle of microchannel at home and abroad. The main reason is that the microstructure, material and manufacturing process of micro reaction lead to high R&D and manufacturing cost, and most of them cannot adapt to the working conditions of high temperature, high pressure and fluid containing solid crystal and powder composition. It is impossible to realize the output multiplication by simply paralleling a plurality of machines. Therefore, the cost of micro reactor is expensive, the structure is complex, and it is difficult to realize the industrialization of large flux and large tonnage.

To solve the above problems, the present invention provides a double chamber heat exchange tube as defined by claim 1. In the tube, the fluid is repeatedly squeezed, diffused, mixed, reversed, and re-squeezed in the fluid channel, thus achieving the strengthening effect of reaction/mixing between fluid molecules. The heat is instantaneously exchanged through the wall of the outer tube and the wall of the inner tube with the heat exchange medium flowing in the shell side and the inner cavity of the inner tube. The process conditions such as temperature and pressure can be controlled accurately with high safety factor. It is especially suitable for the application of chemical reaction/homogeneous mixing process with strong exothermic, high temperature, high pressure, high toxicity and explosion risk. The tube is easy to produce, with low operating cost.

The disclosure provides a heat exchange tube, comprising an outer tube, an inner tube disposed in the outer tube; and a fluid channel formed between the outer tube and the inner tube. The outer tube comprises a wall comprising a plurality of first flat segments, and a plurality of first communication holes formed between every two adjacent first flat segments.

The inner tube comprises a wall comprising a plurality of second flat segments, and a plurality of second communication holes formed between every two adjacent second flat segments.

The plurality of first flat segments is disposed correspondingly to the plurality of second flat segments, respectively.

A first angle of torsion exists between two adjacent first flat segments, and a second angle of torsion exists between two adjacent second flat segments.

In a class of this embodiment, the inner tube is longer than the outer tube, and two ends of the inner tube extends out of two ends of the outer tube, respectively

In a class of this embodiment, the two adjacent first flat segments are connected to each other in a torsional way; the two adjacent second flat segments are connected to each other in a torsional way; and a joint of the two adjacent first flat segments and a joint of the two adjacent second flat segments are both in the shape of a smooth trumpet.

In a class of this embodiment, each of the plurality of first flat segments and the plurality of second flat segments comprises two flat surfaces symmetrically disposed with respect to each other.

The Present invention also provides a heat exchanger, comprising a shell, a tube plate, an end socket, and the aforesaid

heat exchange tube, the heat exchange tube is disposed on the tube plate; the fluid channel is a tube side and a fluid for reaction/mixture/heat exchange flows in the tube side; the outer tube is a shell side, and a heat transfer medium flows in the shell side and an inner cavity of the inner tube.

The following advantages are associated with the heat exchange tube of the disclosure: in the tube, the fluid is repeatedly squeezed, diffused, mixed, reversed, and re-squeezed in the fluid channel, thus achieving the strengthening effect of reaction/mixing between fluid molecules. The heat is instantaneously exchanged through the wall of the outer tube and the wall of the inner tube with the heat exchange medium flowing in the shell side and the inner cavity of the inner tube. The process conditions such as temperature and pressure can be controlled accurately with high safety factor. It is especially suitable for the application of chemical reaction/homogeneous mixing process with strong exothermic, high temperature, high pressure, high toxicity and explosion risk, The tube is easy to produce, with low operating cost.

To more clearly illustrate the embodiments of the disclosure or the description of the related art will be briefly described below. Obviously, the attached drawings described below are only one embodiment of the disclosure. For ordinary technicians in the art, other implementation drawings can be obtained according to the drawings provided without creative labor.
FIG. 1 is a schematic diagram of a microchannel reaction unit of a Corning microreactor in the related art;
FIG. 2 is a schematic diagram of a reaction tube/mixing tube/heat exchange tube according to one embodiment of the disclosure;
FIG. 3 is a section view taken from line A-A in FIG. 2;
FIG. 4 is a schematic diagram of a reaction tube/mixing tube/heat exchange tube in FIG. 3 without an inner tube;
FIG. 5 is a schematic diagram of a reaction tube/mixing tube/heat exchange tube in FIG. 3 without an outer tube;
FIG. 6 is a section view taken from line B-B in FIG. 2; and
FIG. 7 is a schematic diagram of one end of a reaction tube/mixing tube/heat exchange tube in Example 3 of the disclosure.

The disclosure is further described in combination with the drawings and examples below.

Embodiments of the disclosure are described in detail below, and examples of the embodiments are shown in the drawings, where the same or similar label from beginning to end indicates the same or similar element or element with the same or similar function. The following embodiments described with reference to the attached drawings are exemplary and are used only to explain the disclosure, not as a limitation of the disclosure.

In the description of the disclosure, the orientation indicated by the terms "inside" and "outside" are defined based on the orientation shown in the drawings of the description. It is only for the convenience of describing the disclosure and simplifying the description, rather than indicating or implying that the device or element referred to must have a specific orientation, be constructed and operated in a specific direction, Therefore, it cannot be understood as a limitation of the disclosure.

In the description of the disclosure, unless otherwise specified and limited, the terms "installation", "connected" and "connection" should be understood in a broad sense. For example, they can be fixed connection, detachable connection or integrated connection, or be directly connected or indirectly connected through intermediate media. For those of ordinary skill in the art, the specific meaning of the above terms in the disclosure can be understood in specific cases.

In the description of the disclosure, the terms "first" and "second" are used for descriptive purposes only and cannot be understood to indicate or imply relative importance.

### Example 1

As shown in FIGS. 2-6, the disclosure provides a reaction tube/mixing tube/heat exchange tube comprising an outer tube 1, an inner tube 2 disposed in the outer tube 1, and a fluid channel 12 formed between the outer tube 1 and the inner tube 2. The outer tube 1 comprises a wall comprising a plurality of first flat segments 10, and a plurality of first communication holes 11 formed between every two adjacent first flat segments 10.

The diameter of the outer tube 1 and the inner tube 2 can be selected as needed. When in use for industrial production, the tubes with a large diameter can meet the requirements of industrial production for large output and large tonnage. When in laboratory use, the tubes with a small diameter can meet the requirements of precision experiment.

### Example 2

As shown in FIGS. 2-6, based on the disclosure in Example 1, the plurality of first flat segments 10 is disposed correspondingly to the plurality of second flat segments 20, respectively. During processing, the inner tube 2 with circular cross section is inserted into the outer tube 1 which is circular. Parts of the outer tube 1 are flattened by a crushing clamp along the length direction of the outer tube 1. The flattened parts on the outer tube 1 form the plurality of first flat segments 10. In the flattening process, the inner wall of the flattened parts of the outer tube 1 will abut against the outer wall surface of the inner tube 2. When the outer tube is continuously flattened, the inner tube 2 will be flattened, too. The flattened parts of the inner tube 2 form the second flat segments 20. Because the plurality of first flat segments 10 and the plurality of second flat segments 20 are formed successively and have the same position, the plurality of first flat segments 10 is corresponding to the plurality of second flat segments 20 in positions, respectively. In this way, the inner tube 2 is limited in the outer tube 1. Optionally, the cross-sectional area of the fluid channel 12 between the outer tube 1 and the inner tube 2 (along the length direction of the outer tube) is not necessarily constant, which can vary irregularly. The processing method is easy to operate, feasible, and cost-effective.

A first angle of torsion exists between two adjacent first flat segments 10, and a second angle of torsion exists between two adjacent second flat segments 20. The first/second angle of torsion is an arbitrary number other than zero. Every two adjacent first/second angles are equal or unequal, or vary irregularly. Because the plurality of first flat segments 10 and the plurality of second flat segments 20 have the same position on the reaction tube/mixing tube/heat exchange tube, the angles of torsion on the inner tube are the same as those on the outer tube. In this way, the first fluid in the fluid channel 12 forms a violent turbulence, so that the heat energy can be quickly transferred, and the optimal temperature required by the process can be accurately controlled.

The inner diameter of the outer tube and the outer diameter of the inner tube are determined as needed, and particularly, there is a space therebetween. The plurality of continuous or discontinuous first/second flat segments with different angles of torsion is distributed on the same position of the axis of the outer tube and the inner tube. Thus, the irregular fluid channel 12 is formed between the outer tube and the inner tube to allow the continuous flowing of materials. In addition, parts of the inner tube are flattened to form the second flat segments, so that a plurality of second communication holes 21 is formed between every two adjacent second flat segments. When in use, the heat transfer medium flowing through the outer wall of the outer tube and the inner wall of the inner pipe simultaneously exchanges heat with the material in the fluid channel 12 between the inner wall of the outer tube and the outer wall of the inner tube, achieving double (crossflow) heat exchange. Because the inner tube is nested in the outer tube, and no fixed support is involved therein, fine high frequency vibration and radial displacement of the fluid occurs when the fluid passes through the irregular fluid channel and the inner cavity of the inner tube quickly, thereby producing intense turbulence.

### Example 3

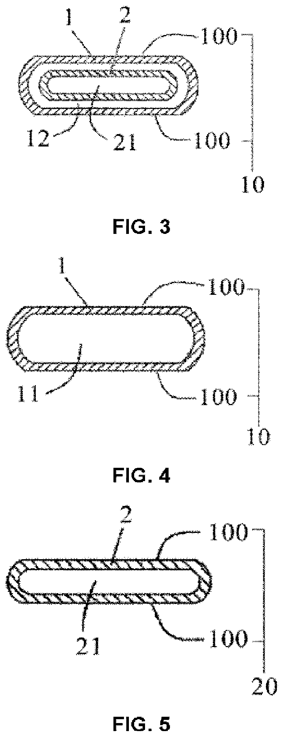

As shown in FIGS. 3-7, the disclosure provides a reaction tube/mixing tube/heat exchange tube comprising an outer tube 1, an inner tube 2 disposed in the outer tube 1, and a fluid channel 12 formed between the outer tube 1 and the inner tube 2. The outer tube 1 comprises a wall comprising a plurality of first flat segments 10, and a plurality of first communication holes 11 formed between every two adjacent first flat segments 10. The inner tube 2 comprises a wall comprising a plurality of second flat segments 20, and a plurality of second communication holes 21 formed between every two adjacent second flat segments 20. The plurality of first flat segments 10 is disposed correspondingly to the plurality of second flat segments 20, respectively. A first angle of torsion exists between two adjacent first flat segments 10, and a second angle of torsion exists between two adjacent second flat segments 20. The two adjacent first flat segments 10 are connected to each other in a torsional way; the two adjacent second flat segments 20 are connected to each other in a torsional way; and a joint of the two adjacent first flat segments 10 and a joint of the two adjacent second flat segments 20 are both in the shape of a smooth trumpet, thus preventing the dead space.

Each of the plurality of first flat segments 10 and the plurality of second flat segments 20 comprises two flat surfaces 100 symmetrically disposed with respect to each other.

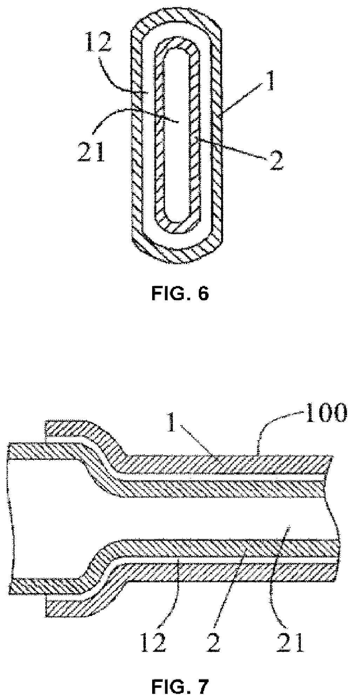

As shown in FIG. 7, to facilitate the assembly of the reaction tube/mixing tube/heat exchange tube, the inner tube 2 is longer than the outer tube 1, and two ends of the inner tube 2 extends out of two ends of the outer tube 1, respectively. According to different usages of the reaction tube/mixing tube/heat exchange tube and the requirements of fluid process and production scale, the cross-section area of the first communication hole 11 can be set differently.

A reactor/mixer/heat exchanger, comprising a shell, a tube plate, an end socket, and the aforesaid reaction tube/mixing tube/heat exchange tube. The reaction tube/mixing tube/heat exchange tube is disposed on the tube plate. The fluid channel 12 is a tube side and a first fluid for reaction/mixture/heat exchange flows in the tube side. The outer tube 1 is a shell side, and a heat transfer medium flows in the shell side and the inner cavity of the inner tube 2. The first fluid molecule to react/mix/exchange heat with others is forcedly squeezed and combined at the first communication hole 11. When the first fluid passes through the joint of the two adjacent first/second flat segments, it is released, mixed, and twisted, and then enters the next first communication hole 11 to be squeezed again. The strengthening effect is repeated and better than that of a single plug flow. The heat generated or required during the process is exchanged instantaneously through the wall body of the outer tube 1 and the wall of the inner tube 2 with the heat exchange medium flowing in the shell side and the inner cavity of the inner tube 2. The heat exchange efficiency is much higher than that of common tubular heat exchangers and tubular heat exchangers in the related art, and also higher than that of Corning sandwich heat exchanger (the heat transfer coefficient of glass itself is not high). For example, at present, the Corning reactor can only realize the strong exothermic reaction of certain products with an annual flow rate of 2000 cubic meters, while the reactor of the disclosure can realize the high-pressure, strong exothermic and endothermic reaction of continuous fluid products with an annual output of one million tons.

It will be obvious to those skilled in the art that changes and modifications may be made,

within the scope of the appended claims.

## Claims

1. A double chamber heat exchange tube, comprising: an outer tube (1);
an inner tube (2) disposed in the outer tube (1); and a fluid channel (12) formed between the outer tube (1) and the inner tube (2);
wherein:
the outer tube (1) comprises a wall comprising a plurality of first flat segments (10), and a plurality of first communication holes (11) formed between every two adjacent first flat segments (10);
the inner tube (2) comprises a wall comprising a plurality of second flat segments (20), and a plurality of second communication holes (21) formed between every two adjacent second flat segments (20);
the plurality of first flat segments (10) is disposed correspondingly to the plurality of second flat segments (20), respectively; and
a first angle of torsion exists between two adjacent first flat segments (10), and a second angle of torsion exists between two adjacent second flat segments (20).

2. The tube of claim 1, wherein the two adjacent first flat segments (10) are connected to each other in a torsional way; the two adjacent second flat segments (20) are connected to each other in a torsional way; and a joint of the two adjacent first flat segments (10) and a joint of the two adjacent second flat segments (20) are both in the shape of a smooth trumpet.

3. The tube of claim 1, wherein each of the plurality of first flat segments (10) and the plurality of second flat segments (20) comprises two flat surfaces (100) symmetrically disposed with respect to each other.

4. The tube of claim 1, wherein the inner tube (2) is longer than the outer tube (1), and two ends of the inner tube (2) extends out of two ends of the outer tube (1), respectively.

5. A heat exchanger, comprising a shell, a tube plate, an end socket, and the heat exchange tube of any one of claims 1-4; wherein the heat exchange tube is disposed on the tube plate; the fluid channel (12) is a tube side and a fluid for heat exchange flows in the tube side; the outer tube (1) is a shell side, and a heat transfer medium flows in the shell side and an inner cavity of the inner tube (2).

## Patentansprüche

1. Doppelkammer-Wärmeaustauschrohr, umfassend: ein Außenrohr (1); ein Innenrohr (2), das im Außenrohr (1) angeordnet ist; und einen Fluidkanal (12), der zwischen dem Außenrohr (1) und dem Innenrohr (2) ausgebildet ist; wobei:
das Außenrohr (1) eine Wand umfasst, die eine Vielzahl von ersten flachen Segmenten (10) und eine Vielzahl von ersten Verbindungslöchern (11) umfasst, die zwischen jeweils zwei benachbarten ersten flachen Segmenten (10) ausgebildet sind;
das Innenrohr (2) eine Wand umfasst, die eine Vielzahl von zweiten flachen Segmenten (20) und eine Vielzahl von zweiten Verbindungslöchern (21) umfasst, die zwischen jeweils zwei benachbarten zweiten flachen Segmenten (20) ausgebildet sind;
die Vielzahl von ersten flachen Segmenten (10) jeweils entsprechend der Vielzahl von zweiten flachen Segmenten (20) angeordnet ist; und
zwischen zwei benachbarten ersten flachen Segmenten (10) ein erster Torsionswinkel besteht und zwischen zwei benachbarten zweiten flachen Segmenten (20) ein zweiter Torsionswinkel besteht.

2. Rohr nach Anspruch 1, wobei die zwei benachbarten ersten flachen Segmente (10) auf torsionale Weise miteinander verbunden sind; die zwei benachbarten zweiten flachen Segmente (20) auf torsionale Weise miteinander verbunden sind; und eine Verbindung der zwei benachbarten ersten flachen Segmente (10) und eine Verbindung der zwei benachbarten zweiten flachen Segmente (20) beide die Form einer glatten Trompete haben.

3. Rohr nach Anspruch 1, wobei jedes der Vielzahl von ersten flachen Segmenten (10) und der Vielzahl von zweiten flachen Segmenten (20) zwei flache Oberflächen (100) aufweist, die symmetrisch zueinander angeordnet sind.

4. Rohr nach Anspruch 1, wobei das Innenrohr (2) länger als das Außenrohr (1) ist und zwei Enden des Innenrohrs (2) jeweils aus zwei Enden des Außenrohrs (1) herausragen.

5. Wärmeaustauscher, umfassend einen Mantel, eine Rohrplatte, einen Endstutzen und das Wärmeaustauschrohr nach einem der Ansprüche 1-4; wobei das Wärmeaustauschrohr an der Rohrplatte angeordnet ist; der Fluidkanal (12) eine Rohrseite ist und in der Rohrseite ein Fluid zum Wärmeaustausch fließt; das Außenrohr (1) eine Mantelseite ist und ein Wärmeübertragungsmedium in der Mantelseite und einem inneren Hohlraum des Innenrohrs (2) fließt.

## Revendications

1. Tube d'échange de chaleur à double chambre, comprenant : un tube externe (1) ; un tube interne (2) disposé dans le tube externe (1) ; et un canal de fluide (12) formé entre le tube externe (1) et le tube interne (2) ; dans lequel :
le tube externe (1) comprend une paroi comprenant une pluralité de premiers segments plats (10) et une pluralité de premiers trous de communication (11) formés entre chacun de deux premiers segments plats adjacents (10) ;
le tube interne (2) comprend une paroi comprenant une pluralité de seconds segments plats (20) et une pluralité de seconds trous de communication (21) formés entre chacun de deux seconds segments plats adjacents (20) ;
la pluralité de premiers segments plats (10) sont disposés de manière correspondante à la pluralité de seconds segments plats (20), respectivement ; et
un premier angle de torsion existe entre deux premiers segments plats adjacents (10), et un second angle de torsion existe entre deux seconds segments plats adjacents (20).

2. Tube selon la revendication 1, dans lequel les deux premiers segments plats adjacents (10) sont reliés l'un à l'autre par torsion ; les deux seconds segments plats adjacents (20) sont reliés l'un à l'autre par torsion ; et une liaison des deux premiers segments plats adjacents (10) et une liaison des deux seconds segments plats adjacents (20) ont toutes deux la forme d'un entonnoir régulier.

3. Tube selon la revendication 1, dans lequel chacun de la pluralité de premiers segments plats (10) et de la pluralité de seconds segments plats (20) comprend deux surfaces plates (100) disposées symétriquement l'une par rapport à l'autre.

4. Tube selon la revendication 1, dans lequel le tube interne (2) est plus long que le tube externe (1), et deux extrémités du tube interne (2) s'étendent respectivement en dehors des deux extrémités du tube externe (1).

5. Échangeur de chaleur, comprenant une coque, une plaque tubulaire, une douille d'extrémité et le tube d'échange de chaleur selon l'une quelconque des revendications 1 à 4 ; dans lequel le tube d'échange de chaleur est disposé sur la plaque tubulaire ; le canal de fluide (12) est un côté tube et un fluide pour l'échange de chaleur s'écoule dans le côté tube ; le tube externe (1) est un côté coque, et un milieu de transfert de chaleur s'écoule dans le côté coque et dans une cavité interne du tube interne (2).
